Europäisches Patentamt

European Patent Office

Office européen des brevets

(11) Veröffentlichungsnummer: **0 373 731**
A1

## (12) EUROPÄISCHE PATENTANMELDUNG

(21) Anmeldenummer: 89250059.6

(22) Anmeldetag: 18.10.89

(51) Int. Cl.⁵: **B65B 7/02, B65B 51/20**

(30) Priorität: 09.12.88 DE 3841450

(43) Veröffentlichungstag der Anmeldung:
20.06.90 Patentblatt 90/25

(84) Benannte Vertragsstaaten:
AT BE CH DE ES FR GB GR IT LI LU NL SE

(71) Anmelder: Effem GmbH
Eitzer Landstrasse
D-2810 Verden/Aller(DE)

(72) Erfinder: Hommola, Jürgen
Franz-Boas-Strasse 13
D-4950 Minden(DE)

(74) Vertreter: Goddar, Heinz J., Dr. et al
FORRESTER & BOEHMERT
Widenmayerstrasse 4/I
D-8000 München 22(DE)

(54) **Vorrichtung zum Verschliessen einer im wesentlichen aus einem Schlauchabschnitt aus einem Thermoplast bestehenden Öffnung.**

(57) Gegenstand der Erfindung ist eine Vorrichtung zum Verschließen einer im wesentlichen aus einem Schlauchabschnitt aus einem Thermoplast, insbesondere Polyethylen bestehenden Öffnung, insbesondere einer Befüllöffnung in einem Verpackungssack. Erfindungsgemäß ist vorgesehen, einen in die Öffnung zum Erhitzen des Thermoplastes einzuführenden Düsenkopf (20) mindestens zweiteilig (2', 3') auszuführen und so zu lagern, daß er im in die Öffnung eingeführten Zustand schnabelartig gespreizt werden kann. Hierdurch wird eine gleichmäßigere Erhitzung der miteinander zu verschweißenden Bereiche bei einer gleichzeitigen Senkung von Energiekosten erreicht.

FIG.2

EP 0 373 731 A1

# Vorrichtung zum Verschließen einer im wesentlichen aus einem Schlauchabschnitt aus einem Thermoplast bestehenden Öffnung

Die Erfindung betrifft eine Vorrichtung zum Verschließen einer im wesentlichen aus einem Thermoplast, insbesondere Polyethylen, bestehenden Öffnung, insbesondere einer Befüllöffnung in einem Verpackungssack; mit einer Heißluftleitung und einem daran angeschlossenen Düsenkopf.

In der industriellen Fertigung als Schüttgüter behandelte Waren des täglichen Bedarfs, die in kleineren Gebinden an den Endverbraucher gelangen, wie beispielsweise Futtermittel für Tiere, Baustoffe, Katzenstreu etc., werden üblicherweise auf automatischen Verpackungslinien in Tüten bzw. Säcke abgefüllt und verpackt. Während diese Tüten bzw. Säcke bei kleineren Gebinden, wie beispielsweise bei einer Tüte für Zucker o.ä. aus Papier bestehen, sind die Säcke für schwerere Gebinde, wie beispielsweise bei nahezu zentnerschweren Gebinden Blumenerde, Torf oder etwa Katzenstreu, häufig aus Kunststoffolie gefertigt.

Diese häufig aus einem Thermoplast, wie beispielsweise Polyethylen, gefertigten Kunststoffsäcke sind im Interesse einer rationellen Abfüllung bzw. Verpackung üblicherweise bis auf eine Befülloffnung, die beispielsweise auch am Boden des Sackes angeordnet sein kann, bereits fertig gefaltet und verschweißt, bevor sie auf einer Befüllmaschine durch die Befüllöffnung mit dem jeweiligen Schüttgut befüllt werden.

Nach dem Befüllvorgang muß die Befüllöffnung des Kunststoffsackes verschlossen werden, wobei es insbesondere bei luftempfindlichen Waren oder bei Waren, die bei einem späteren Transport des befüllten Kunststoffsackes nicht - sei es aus ästhetischen oder aus Kostengründen - in die Umgebung gelangen sollen, darauf ankommt, die Befüllöffnung möglichst hermetisch zu verschließen.

Die i.a. in Form eines Schlauchabschnittes geformte Befüllöffnung wird hierzu erhitzt und hernach durch Verschweißen der einander gegenüberliegenden Wände verschlossen, in dem der Schlauchabschnitt zwischen zwei Klemmbacken zusammengepreßt wird.

Das Erhitzen der inneren Wandung des Schlauchabschnittes bzw. der Befüllöffnung erfolgt üblicherweise durch Heißluft, wozu in die Öffnung ein Düsenkopf eingeführt wird, der eine Anzahl von radial angeordneten, auf die inneren Mantelflächen der Öffnung gerichteten Luftaustrittsöffnungen aufweist. Durch die mit der Heißluft eingebrachte Wärmeenergie werden die mit Heißluft beaufschlagten Bereiche des Schlauchabschnittes bzw. der Befüllöffnung erweicht und nach Zurückziehen des i.a. axial verschiebbaren Düsenkopfes durch Zusammendrücken miteinander verschweißt. Um den Verschlußvorgang abzukürzen und die einzubringende Wärmeenergie angesichts des bereits in dem Sack befindlichen, ggf. temperaturempfindlichen Schüttgutes zu vermeiden, kann dabei der zu verschließende Schlauchabschnitt zusätzlich mit einer thermoplastischen Kunststoffolie mit einem niedrigeren Schmelzpunkt als der des sonstigen Materials, aus dem der Sack gefertigt ist, ausgekleidet sein.

Trotz dieser Maßnahmen ist das Ergebnis, d. h. die Güte der erzeugten Schweißnaht und damit die Sicherheit gegen Herausrieseln des jeweiligen, in dem Sack verpackten Schüttgutes wie auch ggf. eine Sicherheit gegen Luftzutritt häufig nicht zufriedenstellend.

Der Grund für die oft mangelhafte Qualität der die Befüllöffnung verschließenden Schweißnaht ist u.a. darin zu suchen, daß mit herkömmlichen Düsenköpfen die Wärme nicht gleichmäßig genug in die zu schmelzenden Bereiche der inneren Mantelflächen der Befüllöffnung eingeleitet werden kann. Dies ist vor allen Dingen darin begründet, daß der Durchmesser eines herkömmlichen Düsenkopfes um ein beträchtliches Maß kleiner sein muß, als die zu verschließende Befüllöffnung, da anderenfalls der geschmolzene Kunststoff beim Zurückziehen des Düsenkopfes mit diesem in Berührung käme und die Befülloffnung und damit der gesamte Sack an dem Düsenkopf anhaften würde. Wegen dieser vergleichsweise kleinen Dimensionierung des Durchmessers des Düsenkopfes verbleibt also ein Ringspalt zwischen dem in die Befüllöffnung eingeführten Düsenkopf und den inneren, partiell zu erhitzenden Mantelflächen der Befüllöffnungg, was zur Folge hat, daß ein großer Teil des durch den Düsenkopf zugeführten Heißluftstromes ungenutzt ins Freie entweicht bzw. in das Sackinnere geleitet wird und dort unerwünschterweise das Füllgut aufheizt.

Wie unmittelbar einsichtig ist, führt dies zu Energieverlusten, die bei größeren Verpackungsmaschinen, bei denen große Mengen an Säcken befüllt und verschlossen werden, beträchtliche Ausmaße annehmen können.

Wegen der großen Entfernung zwischen der entsprechenden Luftaustrittsöffnung des Düsenkopfes und der dieser gegenüberliegenden, entsprechenden zu erhitzenden Stelle ist darüber hinaus wegen der Abkühlung, den der Heißluftstrom beim Überwinden dieser Distanz erfährt, an der Luftaustrittsöffnung bei der Verarbeitung von herkömmlichen Polyethylenmaterialien eine Temperatur von 250° bis 300° C einzustellen. Wegen des hiermit verbundenen, insgesamt höheren Temperaturniveaus in den gesamten Zuleitungen etc. werden ersichtlicherweise auch die Abstrahlungsverluste der gesamten Verpackungsmaschine deutlich erhöht.

Der Erfindung liegt demgemäß die Aufgabe zugrunde, eine Vorrichtung der eingangs erwähnten Art so zu verbessern, daß die Qualität der eine Öffnung der beschriebenen Art in einem Verpakkungssack verschließenden Schweißnaht verbessert und die aufzuwendende Leistung verringert wird.

Die Lösung der Aufgabe ist bei einer gattungsgemäßen Vorrichtung dadurch gekennzeichnet, daß der Düsenkopf aus wenigstens zwei Teilen besteht, die relativ zueinander beweglich sind.

Eine weitere vorteilhafte Ausgestaltung der Erfindung zeichnet sich dadurch aus, daß zumindest ein Teil des Düsenkopfes um eine Achse gelagert ist.

Eine weitere vorteilhafte Ausgestaltung der Erfindung zeichnet sich dadurch aus, daß die Achse des beweglichen Teils des Düsenkopfes rechtwinklig zur Hauptachse des Düsenkopfes angeordnet ist.

Eine weitere vorteilhafte Ausgestaltung der Erfindung zeichnet sich dadurch aus, daß der Düsenkopf mehrere Luftaustrittsöffnungen aufweist, die sich im wesentlichen radial von der Hauptachse desselben wegerstrecken.

Eine weitere vorteilhafte Ausgestaltung der Erfindung zeichnet sich dadurch aus, daß die Luftaustrittsöffnungen im wesentlichen kreisringförmig in einer Ebene angeordnet sind.

Eine weitere vorteilhafte Ausgestaltung der Erfindung zeichnet sich dadurch aus, daß die Luftaustrittsöffnungen in einer umlaufenden Kehle angeordnet sind.

Eine weitere vorteilhafte Ausgestaltung der Erfindung zeichnet sich dadurch aus, daß parallel zu den ringförmig angeordneten Luftaustrittsöffnungen zumindest eine Ringwulst angeordnet ist.

Eine weitere vorteilhafte Ausgestaltung der Erfindung zeichnet sich dadurch aus, daß der Umfang des Düsenkopfes in dem Bereich, in dem die Luftaustrittsöffnungen angeordnet sind, veränderlich ist.

Eine weitere vorteilhafte Ausgestaltung der Erfindung zeichnet sich dadurch aus, daß der Düsenkopf insgesamt in Richtung seiner Hauptachse axial beweglich ist.

Eine weitere vorteilhafte Ausgestaltung der Erfindung zeichnet sich dadurch aus, daß der Düsenkopf eine im wesentlichen zylindrische Grundform aufweist.

Eine weitere vorteilhafte Ausgestaltung der Erfindung zeichnet sich dadurch aus, daß der im wesentlichen zylinderförmige Düsenkopf aus (wenigstens zwei) Teilen besteht, deren Querschnitt im wesentlichen ein kreissektor ist, dessen Zentriwinkel ein entsprechend der Zahl der Teile des Düsenkopfes umgekehrt proportionaler Teil eines Vollkreises ist.

Eine weitere vorteilhafte Ausgestaltung der Erfindung zeichnet sich dadurch aus, daß der im wesentlichen zylinderförmige Düsenkopf an seinem einem Ende einen sich an den Bereich der Luftaustrittsöffnungen anschließenden kegelförmigen Abschnitt aufweist.

Bei einer weiteren vorteilhaften Ausgestaltung der Erfindung weist diese zumindest einen an dem den Bereich der Luftaustrittsöffnungen abgekehrten Ende des Düsenkopfes angeordneten, rampenförmigen Fortsatz, und einen in dessen Bewegungsrichtung bei axial bewegtem Düsenkopf hineinragenden Anschlag auf.

Eine weitere vorteilhafte Ausgestaltung der Erfindung zeichnet sich dadurch aus, daß der Anschlag eine drehbar gelagerte Rolle aufweist.

Eine weitere vorteilhafte Ausgestaltung der Erfindung zeichnet sich dadurch aus, daß der Düsenkopf im wesentlichen aus drei Teilen besteht, von denen zwei Flügel um in dem dritten (mittleren) Teil angeordnete Achsen schwenkbar sind.

Eine weitere vorteilhafte Ausgestaltung der Erfindung zeichnet sich dadurch aus, daß das dritte Bauteil im wesentlichen die Gestalt zweier miteinander verbundener Platten aufweist, deren (innerer) Abstand voneinander der Breite der beiden anderen Teile entspricht, und daß die Drehachsen der beiden anderen Teile rechtwinklig sich von Platte zu Platte erstrekkend angeordnet sind.

Bei einer weiteren vorteilhaften Ausgestaltung der Erfindung weist diese zumindest eine, mit einem elastischen Material beschichtete Andruckplatte auf.

Bei einer weiteren vorteilhaften Ausgestaltung der Erfindung weist diese zumindest eine mit einer Kante mit kleinem Krümmungsradius versehenen Andruckplatte auf.

In einer bevorzugten Ausgestaltung eines erfindungsgemäßen Düsenkopfes weist dieser zwei einander gegenüberliegend angeordnete Teile auf, die um jeweils eine Achse drehbar gelagert sind und an ihrem jeweils einen Ende einen rampenförmigen Fortsatz aufweisen, der bzw. die beim axialen Verfahren des Düsenkopfes gegen einen Anschlag stoßen, woraufhin die betreffenden Teile gleichsam schnabelartig auseinander gespreizt werden. Durch das schnabelartige Aufspreizen des Düsenkopfes wird dieser gleichsam umfangsmäßig vergrößert und kommt an die innere Wandung der zu verschließenden Befüllöffnung zu liegen.

Damit die Luftaustrittsöffnungen, die vorzugsweise in Form eines Kreisringes angeordnet sind, nicht verschlossen werden und damit der schmelzende Kunststoff nicht an dem Düsenkopf haftet, kann vorgesehen sein, die Luftaustrittsöffnungen in einer umlaufenden Kehle anzuordnen. Parallel an die Kehle anschließend kann eine zum Sackinneren hin abdichtender Ringwulst vorgesehen sein. Mittels einer zweiten, auf der anderen Seite der Kehle, d.h. also dem Sackinneren abgewandt liegenden Ringwulst, deren Durchmesser vorzugsweise etwas geringer ist, als der Durchmesser der erstgenannten Ringwulst, so daß zwischen der inneren Wandung der zu verschließenden Öffnung und der zweitgenannten Ringwulst ein Ringspalt verbleibt, kann bei entsprechender Dimensionierung des Durchmessers der zweitgenannten, i.a. also oben liegenden Ringwulst und der damit gleichzeitig verbundenen Dimensionierung des verbleibenden Ringspaltes der Strömungswiderstand der gesamten Anordnung Düsenkopf/Befüllöffnung eingestellt werden, so daß die bei einem bestimmten Betriebsdruck austretende Luftmenge festgelegt werden kann.

Durch die Kehle und die darüber gespannte zu verschweißende Wandung der Befüllöffnung, sowie ggf. die beiden Ringwülste wird gleichsam ein Kanal gebildet, in den die Luft einströmt und dort aufgrund der hohen Reynoldszahlen in Turbulenz gerät. Durch diese Anordnung wird erreicht, daß ein genau definierter Bereich erhitzt und zum Schmelzen gebracht wird, was darüber hinaus aufgrund der tangentialen Umlenkung der Luftströme wesentlich gleichmäßiger als vorher erfolgt.

Wegen des geringeren Abstandes zwischen der Luftaustrittsöffnung und dem zu erhitzenden Bereich wird darüber hinaus die Verwendung eines Luftstromes wesentlich geringerer Temperatur ermöglicht. Bei einer ausgeführten Versuchsanlage konnte die notwendige Temperatur des Heißluftstromes von etwa 250° C auf etwa 100° - 160° C gesenkt werden; trotzdem waren die erzielten Ergebnisse besser.

Es ist unmittelbar einsichtig, daß mit der Senkung der Temperatur des Luftstromes eine erhebliche Kosteneinsparung verbunden ist. Eine weitere Kosteneinsparung wird erzielt, da das Volumen des Luftstromes aufgrund der präziseren Führung desselben vermindert werden kann. Durch die ggf. angeordnete untere Ringwulst wird darüber hinaus erreicht, daß das abgefüllte Schüttgut von dem heißen Luftstrom nicht bestrichen wird.

Bei einer erfindungsgemäßen Vorrichtung kann weiterhin vorgesehen sein, die zum Verpressen der erhitzten Wandungen benötigten Andruckbacken verschiedenartig zu gestalten. Beispielsweise kann eine erste Andruckbacke mit einem elastischen Werkstoff - beispielsweise Moosgummi - beschichtet sein, wohingegen die zweite, das Gegenstück darstellende Andruckbacke eine vergleichsweise scharfe Kante mit einem kleinen Krümmungsradius aufweist. Auf diese Weise wird eine hohe Flächenpressung in dem erhitzten, zu verschweißenden Bereich erzielt.

Die Erfindung wird im folgenden anhand der Zeichnung näher erläutert. In der Zeichnung zeigen:

Fig. 1 einen zweiteilig aufgebauten Düsenkopf einer erfindungsgemäßen Vorrichtung sowie die dazugehörigen Anschläge teilweise im Schnitt,

Fig. 2 eine Ansicht eines erfindungsgemäßen dreiteiligen Düsenkopfes mit den dazugehörigen Anschlägen,

Fig. 3 die gleiche Ansicht eines erfindungsgemäßen, dreiteiligen Düsenkopfes teilweise im Schnitt, wobei der Übersichtlichkeit halber ein schwenkbarer Teil weggelassen worden ist,

Fig. 4 eine Seitenansicht des gleichen Düsenkopfes teilweise im Schnitt, und

Fig. 5 eine Draufsicht des gleichen Düsenkopfes, teilweise als Querschnitt, wobei ein weiterer, in Fig. 3 dargestellter Teil weggelassen worden ist.

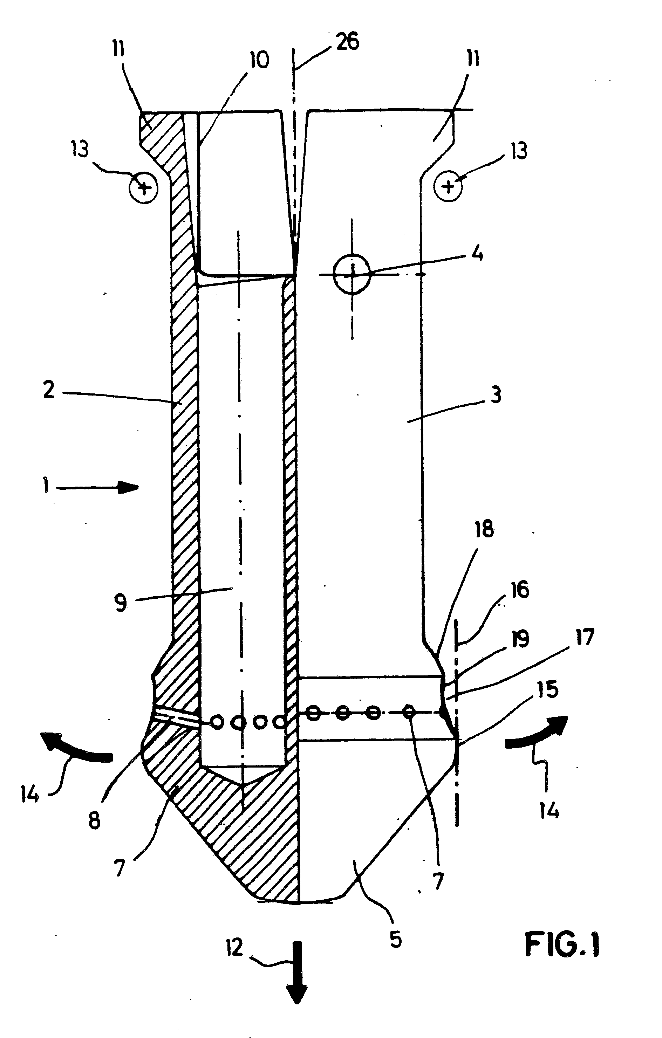

Wie aus Fig. 1 ersichtlich, erweist eine erfindungsgemäße Vorrichtung in einer Variante einen Düsenkopf 1 auf, der aus zwei spiegelsymmtrischen Hälften bzw. Teilen 2 und 3 besteht. Das Teil 3 ist um eine Achse 4 drehbar gelagert desgleichen das Teil 2 um eine entsprechend angeordnete, hier nicht näher dargestellte Achse. Die gesamte Form des Düsenkopfes ist annährend zylinderförmig, wobei der Querschnitt jeweils eines Teiles 2 bzw. 3 im wesentlichen ein Halbkreis ist. In einem - in der Zeichnung dem unteren - Ende geht der Düsenkopf in einen Kegel 5 über. Zwischen dem mittleren zylinderförmigen Teil des Düsenkopfes und dem Kegel 5 befindet sich eine Kehle 6, in der Luftaustrittsöffnungen 7 kreisringförmig angeordnet sind. Die Luftaustrittsbohrungen 7 sind über Kanäle 8 mit einem jeweils in den Teilen 2 und 3 vorhandenen inneren Hohlraum 9 verbunden, der über einen schematisch dargestellten Anschlußstutzen 10 mit einer nicht dargestellten Heißluftleitung in Verbindung steht und von dort aus mit Heißluft beaufschlagt wird.

An dem anderen - in der Zeichnung oberen - Ende des Düsenkopfes weisen beide Teile 2 und 3 je einen rampfenförmigen Fortsatz 11 auf. Wird der gesamte Düsenkopf in Richtung des Pfeiles 12 axial verfahren, so gelangen die rampenförmigen Fortsätze 11 mit Anschlägen 13 in Eingriff, die ggf. auch als drehbar gelagerte Rolle ausgestaltet sein können. Bei weiterem Verfahren des Düsenkopfes in Richtung des Pfeiles 12 drehen sich die Hälften 2 und 3 um ihre jeweiligen Achsen, wobei der Düsenkopf an seinem unteren Ende in Richtung der Pfeile 14 gleichsam schnabelartig aufgespreizt wird. Bei genügend weiter Spreizung liegen die Hälften 2 bzw. 3 mit einer an dem jeweiligen unteren Ende parallel zu der Kehle 6 befindlichen Ringwulst 15 an der - hier idealisiert dargestellten - Wandung 16 der zu verschließenden Befüllöffnung an. Die durch die Hohlräume 9 und die jeweiligen Kanäle 8 fließende und an den Austrittsöffnungen 7 austretende heiße Luft gelangt in einen zwischen der Wandung 16 und der Hohlkehle 6 gebildeten Ringspalt 17, wo sie verwirbelt wird und ihre Wärme an die kalte Wandung 16 abgibt. Durch einen zwischen einer zweiten Ringwulst 18 und der Wandung 16 gebildeten, ebenfalls kreisringförmigen Spalt 19 kann die Luft kontrolliert entweichen.

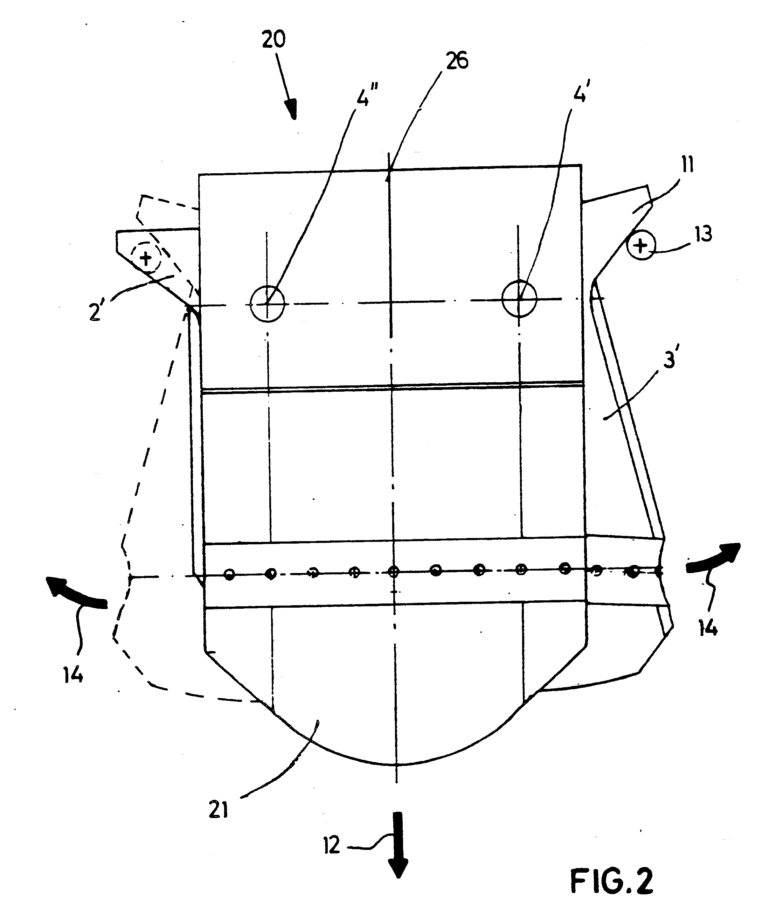

Ein Nachteil dieses Düsenkopfes, der sich durch seinen einfachen Aufbau auszeichnet, ist es, daß durch den zwischen den beiden Hälften bzw. Teilen 2 und 3 in gespreiztem Zustand verbleibenden Spalt ein Teil der zu erhitzenden Wandung der Befüllöffnung nicht unmittelbar mit Heißluft beaufschlagt wird. Dieser Mangel kann durch eine etwas aufwendigere Konstruktion des erfindungsgemäßen Düsenkopfes, wie in Fig. 2 dargestellt, abgestellt werden.

Der in Fig. 2 dargestellte Düsenkopf 20 zeichnet sich durch einen dreiteiligen Aufbau aus, wobei zwei gleichsam flügelartig angeordnete Außenteile 2′ und 3′ jeweils um eine Achse 4′ bzw. 4″ schwenkbar an einem Mittelteil 21 befestigt sind.

Die Funktionsweise ist völlig analog dem in Fig. 1 dargestellten Ausführungsbeispiel eines erfindungsgemäßen Düsenkopfes bzw. einer erfindungsgemäßen Vorrichtung zum Verschließen einer Öffnung der genannten Art. Bei einem senkrecht - wie in Fig. 2 dargestellt - angeordneten Düsenkopf kann durch geeignete Wahl des Schwerpunktes der Teile 2′ bzw. 3′ erreicht werden, daß diese bei Zurückverfahren des Düsenkopfes 20, d.h. in der zu dem Pfeil 12 entgegengesetzen Richtung, unter dem Einfluß der Schwerkraft von selbst in ihre ursprüngliche Lage zurückkehren.

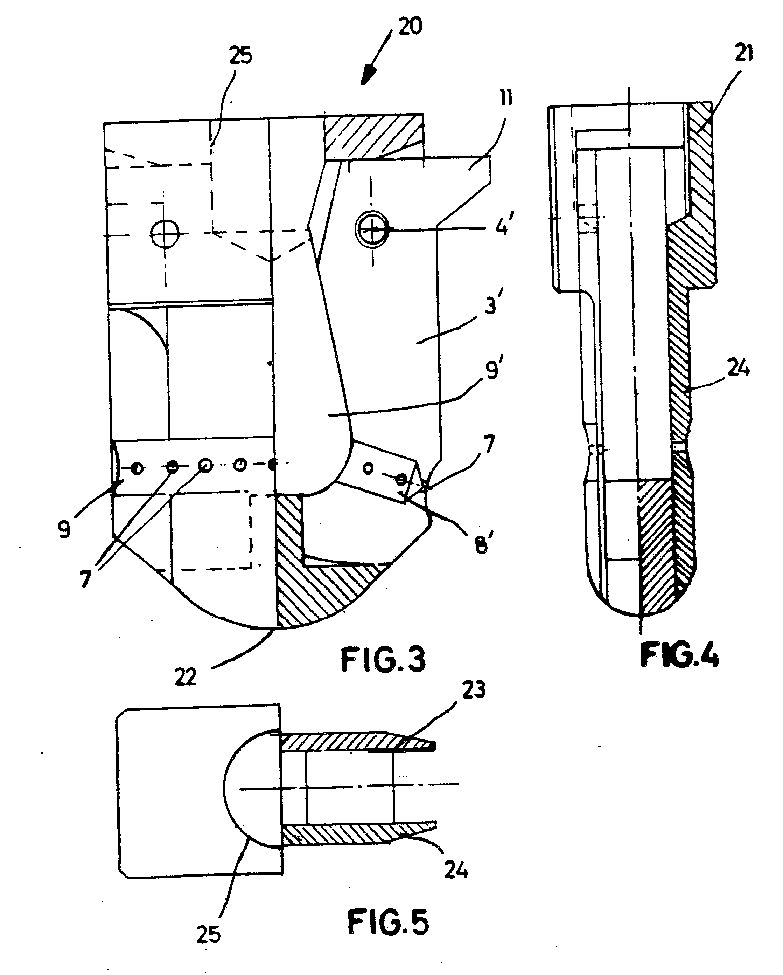

Der innere Aufbau des dreiteiligen, in Fig. 2 dargestellten Düsenkopfes ist in den Figuren 3, 4 und 5 näher dargestellt, wobei der Flügel 2′ der besseren Übersichtlichkeit halber weggelassen worden und der Flügel 3′ in eingeklappter Stellung gezeichnet ist.

Der Düsenkopf 20 besteht aus einem sich nach oben hin erweiteren Mittelteil 21, welches im wesentlichen die geometrische Grundform zweier im einen Bereich 22 miteinander verbundener Platten 23 bzw. 24 aufweist. Zwischen diesen Platten angeordnet sind die ausschwenkbaren Flügel 3′ bzw. der hier nicht dargestellte Flügel 2′. Im oberen Teil des Mittelstückes 21 ist eine Bohrung 25 zum Anschluß der Heißluftleitung angebracht.

Die Heißluft strömt durch die Bohrung 25 in den von den einzelnen Bauteilen 2′, 3′ bzw. 21 gebildeten Hohlraum 9′, und von dort durch die Kanäle 8′ zu den in einer Kehle 6 ringkreisförmig angeordneten Austrittsöffnungen 7.

Wie aus Fig. 2 ersichtlich, können die Luftaustrittsöffnungen 7 eines Flügels 3′ so unter einem Winkel senkrecht angeordnet sein, daß die Gesamtheit aller Luftaustrittsöffnungen bei ausgeklappten Flügeln 2′ bzw. 3′ insgesamt annähernd in einer Ebene liegen.

Durch die erfindungsgemäße Ausgestaltung einer Vorrichtung zum Verschließen einer Öffnung in Verpackungsmaterial aus thermoplastischen Kunststoffen wird die Güte der die Öffnung verschließenden Schweißnaht - bei gleichzeitiger Senkung der aufzuwendenden Leistung und damit der Kosten - erhöht.

Die in der vorstehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

**Ansprüche**

1. Vorrichtung zum Verschließen einer im wesentlichen aus einem Schlauchabschnitt aus einem Thermoplast, insbesondere Polyethylen, bestehenden Öffnung, insbesondere einer Befüllöffnung in einem Verpackungssack; mit einer Heißluftleitung und einem daran angeschlossenen Düsenkopf, **dadurch gekennzeichnet**, daß der Düsenkopf (1, 20) aus wenigstens zwei Teilen (2, 3, 2′, 3′, 21) besteht, die relativ zueinander beweglich sind.

2. Vorrichtung nach Anspruch 1, **dadurch gekennzeichnet**, daß zumindest ein Teil (2, 3, 2′, 3′) des Düsenkopfes (1, 20) um eine Achse (4, 4′, 4″) drehbar gelagert ist.

3. Vorrichtung nach Anspruch 2, **dadurch gekennzeichnet**, daß die Achse (4, 4′, 4″) des beweglichen Teils des Düsenkopfes rechtwinklig zur Hauptachse (26) des Düsenkopfes angeordnet ist.

4. Vorrichtung nach einem der vorhergehenden Ansprüche, **dadurch gekennzeichnet**, daß der Düsenkopf (1, 20) mehrere Luftaustrittsöffnungen (7) aufweist, die sich im wesentlichen radial von der Hauptachse (26) desselben wegerstrecken.

5. Vorrichtung nach Anspruch 4, **dadurch gekennzeichnet**, daß die Luftaustrittsöffnungen (7) im wesentlichen kreisringförmig in einer Ebene angeordnet sind.

6. Vorrichtung nach einem der vorhergehenden Ansprüche, **dadurch gekennzeichnet**, daß die Luftaustrittsöffnungen in einer umlaufenden Kehle (6) angeordnet sind.

7. Vorrichtung nach Anspruch 6, **dadurch gekennzeichnet**, daß parallel zu den ringförmig angeordneten Luftaustrittsöffnungen (7) zumindest eine Ringwulst (15, 19) angeordnet ist.

8. Vorrichtung nach einem der vorhergehenden Ansprüche, **dadurch gekennzeichnet**, daß. der Umfang des Düsenkopfes (1, 20) in dem Bereich, in dem die Luftaustrittsöffnungen angeordnet sind, veränderlich ist.

9. Vorrichtung nach einem der vorhergehenden Ansprüche, **dadurch gekennzeichnet**, daß der Düsenkopf insgesamt in Richtung seiner Hauptachse axial beweglich ist.

10. Vorrichtung nach einem der vorhergehenden Ansprüche, **dadurch gekennzeichnet**, daß der Düsenkopf (1) eine im wesentlichen zylindrische Grundform aufweist.

11. Vorrichtung nach Anspruch 10, **dadurch gekennzeichnet**, daß der im wesentlichen zylinderförmige Düsenkopf (1) aus (wenigstens zwei) Teilen (2, 3) besteht, deren Querschnitt im wesentlichen ein Kreissektor ist, dessen Zentriwinkel ein entsprechend der Zahl der Teile des Düsenkopfes umgekehrt proportionaler Teil eines Vollkreises ist.

12. Vorrichtung nach einem der Ansprüche 10 oder 11, **dadurch gekennzeichnet**, daß der im wesentlichen zylinderförmige Düsenkopf (1) an seinem einem Ende einen sich an den Bereich der Luftaustrittsöffnungen (7) anschließenden kegelförmigen Abschnitt (5) aufweist.

13. Vorrichtung nach einem der vorhergehenden Ansprüche, **gekennzeichnet durch** zumindest einen an dem den Bereich der Luftaustrittsöffnungen abgekehrten Ende des Düsenkopfes angeordneten, rampenförmigen Fortsatz, und einen in dessen Bewegungsrichtung bei axial bewegtem Düsenkopf hineinragenden Anschlag (13).

14. Vorrichtung nach Anspruch 13, **dadurch gekennzeichnet**, daß der Anschlag (13) eine drehbar gelagerte Rolle aufweist.

15. Vorrichtung nach einem der vorhergehenden Ansprüche, **dadurch gekennzeichnet**, daß der Düsenkopf (20) im wesentlichen aus drei Teilen (2', 3', 21) besteht, von denen zwei Flügel (2', 3') um in dem dritten (mittleren) Teil (21) angeordnete Achsen (4', 4'') schwenkbar sind.

16. Vorrichtung nach Anspruch 14, **dadurch gekennzeichnet**, daß das dritte Bauteil (21) im wesentlichen die Gestalt zweier miteinander verbundener Platten (23, 24) aufweist, deren (innerer) Abstand voneinander der Breite der beiden anderen Teile (2', 3') entspricht, und daß die Drehachsen (4', 4'') der beiden anderen Teile (2', 3') rechtwinklig sich von Platte (23) zu Platte (24) erstreckend angeordnet sind.

17. Vorrichtung nach einem der vorhergehenden Ansprüche, **gekennzeichnet durch** zumindest eine, mit einem elastischen Material beschichtete Andruckplatte.

18. Vorrichtung nach einem der vorhergehenden Ansprüche, **gekennzeichnet durch** zumindest eine mit einer Kante mit kleinem Krümmungsradius versehenen Andruckplatte.

FIG.1

FIG.2

EP 0 373 731 A1

FIG.3

FIG.4

FIG.5

## EINSCHLÄGIGE DOKUMENTE

| Kategorie | · Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 442 187 (HAVER & BOECKER) * Zusmmenfassung; Figuren 1,3 * --- | 1-5,8,9 | B 65 B 7/02 B 65 B 51/20 |
| Y | FR-A-2 278 962 (HURDEQUINT) * Seite 2, Zeile 32 - Seite 3, Zeile 24; Figuren 1,2 * --- | 1-5,8,9 | |
| A | US-A-1 939 502 (KIEFER) * Seite 1, Zeilen 73-84; Figur 2 * --- | 13,14 | |
| A | FR-A-1 203 466 (DOYEN) --- | | |
| A | GB-A- 859 554 (AGFA) --- | | |
| A | GB-A-2 134 037 (LINNER) ----- | | |

**RECHERCHIERTE SACHGEBIETE (Int. Cl.5)**

B 65 B
B 29 C
B 29 B

Der vorliegende Recherchenbericht wurde für alle Patentansprüche erstellt

| Recherchenort | Abschlußdatum der Recherche | Prüfer |
|---|---|---|
| DEN HAAG | 16-03-1990 | CLAEYS H.C.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument